# EUROPÄISCHE PATENTSCHRIFT

(11) **EP 4 370 277 B1**
(45) Veröffentlichungstag und Bekanntmachung des Hinweises auf die Patenterteilung: **18.02.2026**
(21) Anmeldenummer: 22744419.7
(22) Anmeldetag: 01.07.2022
(51) Int. Cl.: B23K 26/21, B23K 26/323, B21K 1/56, F16B 25/00, B23K 103/04, B23K 101/20

(54) **VERFAHREN ZUR HERSTELLUNG EINER BIMETALLSCHRAUBE**
PROCESS FOR MANUFACTURING A BIMETALLIC SCREW
PROCÉDÉ DE FABRICATION D'UNE VIS BIMÉTALLIQUE

(30) Priorität: 14.07.2021 DE 102021118219
(43) Veröffentlichungstag der Anmeldung: 22.05.2024
(73) Patentinhaber: fischerwerke GmbH & Co. KG, 72178 Waldachtal (DE)
(72) Erfinder: ECHLE, Benjamin, 77776 Schapbach (DE); WÄLDER, Jonas, 71069 Sindelfingen (DE); FREUDIGMANN, Lars, 72072 Tübingen (DE); SCHILLING, Sebastian, 72285 Pfalzgrafenweiler-Durrweiler (DE)
(86) Internationale Anmeldenummer: PCT/EP2022/068233
(87) Internationale Veröffentlichungsnummer: WO 2023/285166

(56) Entgegenhaltungen:
- EP-A1- 3 267 052
- WO-A2-88/05991
- DE-C2- 2 549 147
- US-A1- 2021 054 866

## Beschreibung

Die Erfindung betrifft ein Verfahren zur Herstellung einer Bimetallschraube mit den Merkmalen des Oberbegriffs des Anspruchs 1.

Aus der europäischen Patentanmeldung EP 3 536 812 A1 ist ein Verfahren zum Herstellen einer Bimetallschraube bekannt. Die Schraube, eine Betonschraube, wird durch das Verschweißen von zwei Schaftteilen zu einem Grundkörper hergestellt. Ein Gewinde der Schraube wird bereits vor dem Verschweißen auf Rohlinge der beiden zu verschweißenden Schaftteile gewalzt.

Ein weiteres Verfahren zur Herstellung einer Bimetallschraube ist aus der europäischen Patentanmeldung EP 3 674 028 A1 bekannt. Bei dem Verfahren werden zwei Schaftteile der Schraube vor dem Walzen eines Außengewindes der Schraube miteinander mittels Strahlschweißen verschweißt. Dabei werden die beiden Schaftteile, die denselben Außendurchmesser aufweisen, gegeneinandergepresst und gemeinsam um eine Längsachse rotiert, so dass die Schaftteile mittels Rundschweißen über den gesamten Umfang verschweißt werden.

Aus der US 2021/054866 A1 ist ein Verfahren bekannt, bei dem zwei Teile einer Bimetallschraube laserstrahlgeschweißt werden.

Aufgabe der Erfindung ist, die Herstellung einer Schraube zu vereinfachen.

Diese Aufgabe wird erfindungsgemäß durch ein Verfahren mit den Merkmalen des Anspruchs 1 gelöst. Das erfindungsgemäße Verfahren dient zur Herstellung einer erfindungsgemäßen Schraube, insbesondere einer Bimetallschraube, insbesondere einer Betonschraube. Die erfindungsgemäße Schraube umfasst einen in Einbringrichtung vorderen ersten Schaftteil und einen zweiten Schaftteil, wobei die beiden Schaftteile in Richtung einer Längsachse der Schraube hintereinander angeordnet und an einer Schweißstelle miteinander zu einem Grundkörper der Schraube verschweißt werden. Mit "in Einbringrichtung vorderer Schaftteil" ist der Schaftteil des Grundkörpers der Schraube gemeint, der beim planmäßigen Einbringen der Schraube in ein Bohrloch zuerst in das Bohrloch gelangt. Der vordere Schaftteil der Bimetallschraube ist zum Bohren und/oder zum Schneiden beziehungsweise Formen eines Gewindes in einem Werkstoff vorgesehen und wird vorzugsweise aus einem ersten Stahl hergestellt, der derart härtbar ist, dass das vordere Schaftteil nach dem Härten zum Bohren, Schneiden oder Einformen eines Gewindes in ein Bohrloch geeignet ist. Der hintere Schaftteil ist vorzugsweise aus einem zweiten Stahl hergestellt, dessen Kohlenstoffkonzentration geringer ist als die Kohlenstoffkonzentration des ersten Stahls. Eine derartige Schraube wird üblicherweise auch "Bimetallschraube" genannt. Hier und nachfolgend werden die Begriffe "Schraube", "Bimetallschraube" sowie "Betonschraube" synonym insbesondere für eine nach dem erfindungsgemäßen Verfahren hergestellte Schraube verwendet.

Derartige Bimetallschrauben sind einem Fachmann bekannt und werden typischerweise im Außenbereich eines Gebäudes oder in feuchten Innenbereichen eingesetzt, wobei der härtebare vordere erste Schaftteil die Funktion des Bohrens, Schneidens oder Gewindeformens übernimmt, während der hintere zweite Schaftteil, der aus einem korrosionsbeständigen Stahl hergestellt ist, eine dauerhafte Tragfähigkeit der Bimetallschraube gewährleistet. Typische Bimetallschrauben werden eingesetzt, um beispielsweise Stahlbleche als Fassadenelemente an Unterkonstruktionen zu befestigen oder, im Fall einer Betonschraube, um Bauteile beispielsweise an einer Außenwand aus Beton zu befestigen.

Eine "Betonschraube" ist eine spezielle Art von Schraube, die in ein in einen mineralischen Verankerungsgrund vorgebohrtes Bohrloch eingeschraubt werden kann, insbesondere in Beton, wobei die Schraube sich ihren Gewindegang in dem Verankerungsgrund selbstständig schneidet. Bei Betonschrauben, die als Bimetallschraube ausgestaltet sind, weist der vordere Schaftteil im gebrauchsfertigen Zustand eine Härte von mindestens 50 HRC, insbesondere von mindestens 55 HRC auf, um ein Einschneiden des Gewindegangs durch den vorderen Schaftteil beim Eindrehen der Schraube in ein Bohrloch im Beton zu gewährleisten. Der vordere Schaftteil besteht beispielsweise aus einem entsprechend härtbaren Stahl mit der Werkstoffnummer 1.4037 gemäß DIN EN 10088-3:2014-12. Dagegen besteht der zweite, hintere Schaftteil aus einem zweiten Stahl, dessen Kohlenstoffkonzentration geringer ist als die Kohlenstoffkonzentration des ersten Stahls. Insbesondere ist der zweite Stahl im Hinblick auf den Einfluss von Feuchte im Außenbereich eines Gebäudes korrosionsbeständiger als der erste Stahl, so dass er für Befestigungselemente geeignet ist, die im Außenbereich eingesetzt werden sollen.

Beispielsweise besteht der zweite Schaftteil aus einem Stahl mit der Werkstoffnummer 1.4401 gemäß DIN EN 10088-3:2014-12.

Der erste Schaftteil der erfindungsgemäßen Schraube ist insbesondere kürzer als der zweite Schaftteil, damit der zweite Schaftteil verhältnismäßig weit in ein Bohrloch eingreifen kann. Dadurch wird eine gute Tragfähigkeit der Schraube im Verankerungsgrund dauerhaft gewährleistet.

Die beiden Schaftteile sind vor dem Walzen des Gewindes insbesondere im Wesentlichen zylinderförmig. Sie werden üblicherweise aus einem Drahtmaterial hergestellt. Insbesondere weisen die Schaftteile jeweils zumindest eine ebene Grund- oder Deckfläche als Stirnseite auf. An dem zweiten Schaftteil kann zudem ein Kopfabschnitt, insbesondere in Form eines typischen Schraubenkopfs, einstückig angeordnet sein oder nach dem Verschweißen angeordnet werden. "Anordnen" meint hier insbesondere Anformen, insbesondere durch Kaltmassivumformen. Der Schraubenkopf kann beispielsweise als Senkkopf mit eingeprägter Bitaufnahme oder Sechskantkopf ausgeformt sein, wie dies aus dem Stand der Technik bekannt ist. Der Kopfabschnitt kann alternativ auch als zweites Außengewinde ausgestaltet sein, das sich von dem ersten Außengewinde unterscheidet, das zum Einschneiden in den Verankerungsgrund vorgesehen ist. Insbesondere ist das zweite Außengewinde ein metrisches Gewinde, wie dies aus dem Stand der Technik bekannt ist. Der Kopfabschnitt wird insbesondere an dem zweiten Schaftteil durch Umformen angeformt, bildet aber kein Teil des zweiten Schaftteils.

Die beiden Schaftteile werden erfindungsgemäß zu einem Grundkörper der Schraube miteinander verschweißt, vorzugsweise, bevor nachfolgend das Gewinde auf diesen Grundkörper gewalzt wird. Das Gewinde erstreckt sich insbesondere in Längsrichtung vom ersten Schaftteil über die Schweißstelle zum zweiten Schaftteil und ist insbesondere auch im Bereich der Schweißstelle nicht unterbrochen. Insbesondere kann sich das Gewinde vollständig über den ersten Schaftteil erstrecken, wobei vorne ein Gewindeanlauf vorgesehen sein kann, der sich beispielsweise über eine Umdrehung des Gewindes erstreckt. Dagegen endet das Gewinde typischerweise am zweiten Schaftteil mit Abstand vor dem Kopfabschnitt.

Die Verschweißung erfolgt erfindungsgemäß mittels Strahlschweißen, insbesondere mit einem Laserstrahl. Dies hat den Vorteil, dass die Schaftteile beim Verschweißen, im Gegensatz beispielsweise zum Reibschweißen, nicht gegeneinandergepresst, sondern nur in Position zueinander gehalten werden müssen, so dass das durch das Schweißen weiche Material nicht durch das axiale Zusammenpressen der beiden Schaftteile radial nach außen gedrückt wird. Somit wird die Bildung einer unerwünschten Wulst im Bereich der Schweißnaht vermieden oder zumindest reduziert.

Kennzeichnend für das erfindungsgemäße Verfahren zur Herstellung der Schraube ist, dass die beiden Schaftteile beim Verschweißen kontinuierlich relativ zum Schweißstrahl, insbesondere einem Laserstrahl, und durch den Schweißstrahl hindurchbewegt werden. Eine reine Rotation ist in diesem Sinne keine Bewegung relativ zum Schweißstrahl, da durch eine reine Rotation keine Bewegung durch den Schweißstrahl hindurch erfolgen kann. Insbesondere erfolgt die Bewegung durch den Schweißstrahl ohne oder nur mit einer geringfügigen Rotation um die Längsachse. Insbesondere erfolgt die Bewegung in einer Translation der Schaftteile, insbesondere in einer gemeinsamen Translation. Auch kann die Bewegung beschleunigt und/oder verzögert sein. Insbesondere erfolgt die Bewegung ohne Halt und insbesondere mit konstanter Geschwindigkeit. Während des eigentlichen Schweißvorgangs werden die beiden Schaftteile somit nicht für die gesamte Dauer des Schweißvorgangs in einer festen Position zum Laserstrahl gehalten, sondern zumindest während des Schweißvorgangs kontinuierlich durch den Laserstrahl hindurchbewegt. Dabei kann entweder der Schweißstrahl in Bezug auf die Schaftteile, die Schaftteile und der Schweißstrahl oder die Schaftteile durch einen feststehenden Schweißstrahl bewegt werden, wobei ein feststehender Schweißstrahl bevorzugt ist.

Die Bewegung der Schaftteile relativ zum Laserstrahl muss keine reine Translation sein. Es ist nicht ausgeschlossen, dass die Schaftteile beim Verschweißen um die Längsachse gedreht werden, beispielsweise hervorgerufen durch Reibung in einer Linearzuführung bei der Bewegung hin zum Schweißstrahl. Erfindungsgemäß werden die Schaftteile während des Schweißvorgangs, also wenn sich die Schaftteile im Schweißstrahl befinden, nicht in ihrer Bewegung gestoppt und während des Stopps um 360 Grad, also vollständig, um ihre Längsachse im Schweißstrahl gedreht, wie es bei einem "Rundschweißen", also einem Verschweißen vollständig um den Umfang der Schaftteile herum, erfolgt. Vorzugsweise werden die beiden Schaftteile beim Verschweißen mittels des Schweißstrahls während der Bewegung durch den Schweißstrahl um nicht mehr als 90 Grad, insbesondere um nicht mehr als 45 Grad, und vorzugsweise im Wesentlichen nicht um die Längsachse der Schraube rotiert.

Aufgrund der kontinuierlichen Bewegung der Schaftteile durch den Laserstrahl beim Verschweißen, ohne dass die Bewegung im Laserstrahl vollständig stoppt, kann das Verschweißen in relativ kurzer Zeit erfolgen, so dass mehr Grundkörper in der gleichen Zeit hergestellt werden können, als dies mit dem aus dem Stand der Technik bekannten Rundschweißen möglich ist, bei dem die Schaftteile gemeinsam in den Schweißstrahl eingeführt und dort zum Verschweißen gemeinsam um 360° um ihre Längsachse gedreht und erst nach dem Verschweißen weiterbewegt werden. Das erfindungsgemäße Verfahren ist somit kostengünstig, ohne dass dadurch Qualitätsverluste beim Verschweißen in Kauf genommen werden müssten.

Das Verschweißen kann mit genau einem Schweißstrahl erfolgen, es können aber auch mehrere Schweißstrahlen verwendet werden, wobei insbesondere zwei Schweißstrahlen auf einer Achse liegen und einander entgegengesetzt sind, sodass die Schaftteile gleichzeitig an gegenüberliegenden Seiten durch die Schweißstrahlen erhitzt werden, was die zum Verschweißen notwendige Verweildauer der Schaftteile in den Laserstrahlen weiter reduziert.

Weiterhin ist bevorzugt, dass die beiden Schaftteile in einer Zuführung zum Schweißstrahl bewegt und in der Zuführung in Richtung der Längsachse der Schraube aufeinander zugeführt werden. Das bedeutet, dass die beiden Schaftteile quer, insbesondere normal zur Zuführungsrichtung zum Laserstrahl zum Verschweißen aufeinander zugeführt werden. Da das Aufeinanderzuführen der beiden Schaftteile somit während der Bewegung der beiden Schaftteile in der Zuführung in Richtung zum Schweißstrahl erfolgt, kann die Zuführung und somit auch das Verschweißen kontinuierlich erfolgen, was einen hohen Durchsatz von zu verschweißenden Schaftteilen durch die Schweißvorrichtung ermöglicht.

Vorzugsweise berühren sich die beiden Schaftteile beim Verschweißen an Stirnseiten, die insbesondere einen kreisförmigen Querschnitt aufweisen und/oder insbesondere eben sind. Die Schaftteile können im Bereich der zu verschweißenden Stirnseiten kegelstumpfförmig angefast sein, so dass das beim Schweißvorgang weiche Materialgemisch diesen Bereich füllen kann, ohne dass dadurch eine Wulst entsteht, die radial über den Grundkörper, den die beiden Schaftteile vor dem Verschweißen definieren, übersteht. Ein derartiger Wulst müsste nach dem Verschweißen sonst durch aufwändiges Nachbearbeiten entfernt werden.

Alternativ können die beiden Schaftteile zu Beginn des Schweißvorgangs, also wenn die beiden Schaftteilteile den Ort erreicht haben, an dem der Schweißstrahl auf sie wirkt, voneinander beabstandet sein, wodurch die Wulstbildung ebenfalls verhindert wird. Der Abstand der beiden Schaftteile ist beim Verschweißen insbesondere kleiner als 1 Millimeter. Auf Grund des geringen Abstands füllt sich der Bereich zwischen den beiden Schaftteilen beim Verschweißen mit dem Materialgemisch der beim Schweißvorgang sich vermischenden Materialien der beiden Schaftteile, das die Schweißnaht bildet. Da das Materialgemisch nun auch die Schweißnaht zwischen den beiden Teilen bildet, die vor dem Verschweißen aufgrund des gewählten Abstands nicht mit Material der beiden Schaftteile gefüllt war, steht zu wenig Material zur Verfügung, um das Volumen vollständig zu füllen, so dass die Schweißnaht radial zumindest in Teilbereichen unter den Durchmessern der Schaftteile untersteht.

Weiterhin ist bevorzugt, dass beim Bewegen der Schaftteile durch den Schweißstrahl die Leistung des Schweißstrahls zunächst vergrößert und dann wieder verringert wird. Treten die Schaftteile in den Schweißstrahl ein, wird die Leistung erhöht, dann wieder verringert, was üblicherweise auch als "Rampen" bekannt ist. Die Verringerung kann beim Austreten der Schaftteile aus dem Schweißstrahl oder bereits dann schon geschehen, wenn die Längsachse der Schraube und somit der beiden Schaftteile durch das Zentrum des Schweißstrahls hindurchtritt. Insbesondere kann die Leistung vom Eintritt der Schaftteile bis zu dem Zeitpunkt erhöht werden, wenn die Längsachse der Schraube das Zentrum des Schweißstrahls erreicht, und danach wieder kontinuierlich auf den Ausgangswert abgesenkt werden. Durch die Leistungsanpassung kann der Schweißvorgangs optimiert und die Verweildauer der Schaftteile im Laserstrahl verringert werden.

Damit die Schweißstelle das Walzen des Gewindes nicht behindert, ist vorzugsweise der Durchmesser des zweiten Schaftteils in dem Bereich, in dem vorzugsweise nach dem Verschweißen das Gewinde gewalzt wird, kleiner als der Durchmesser des ersten Schaftteils. Dabei bleiben Abschnitte des zweiten Schaftteils, in denen kein Gewinde geformt wird, bei der Ermittlung des Durchmessers unberücksichtigt, ebenfalls ein Kopfabschnitt, der kein Teil des zweiten Schaftteils bildet.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels aufweisen, sind möglich.

Die Erfindung wird nachfolgend anhand eines Ausführungsbeispiels näher erläutert.

Es zeigen:
- Figur 1: eine Bimetallschraube in einer Seitenansicht
- Figur 2: einen Rohling der Bimetallschraube in einer Seitenansicht;
- Figur 3: eine schematische Darstellung des Schweißvorgangs zur erfindungsgemäßen Herstellung der Bimetallschrauben in einer Seitenansicht; und
- Figuren 4a- c: eine schematische Darstellung des Durchgangs der beiden Schaftteile des Grundkörpers der Bimetallschraube durch den Schweißstrahl in einer Draufsicht.

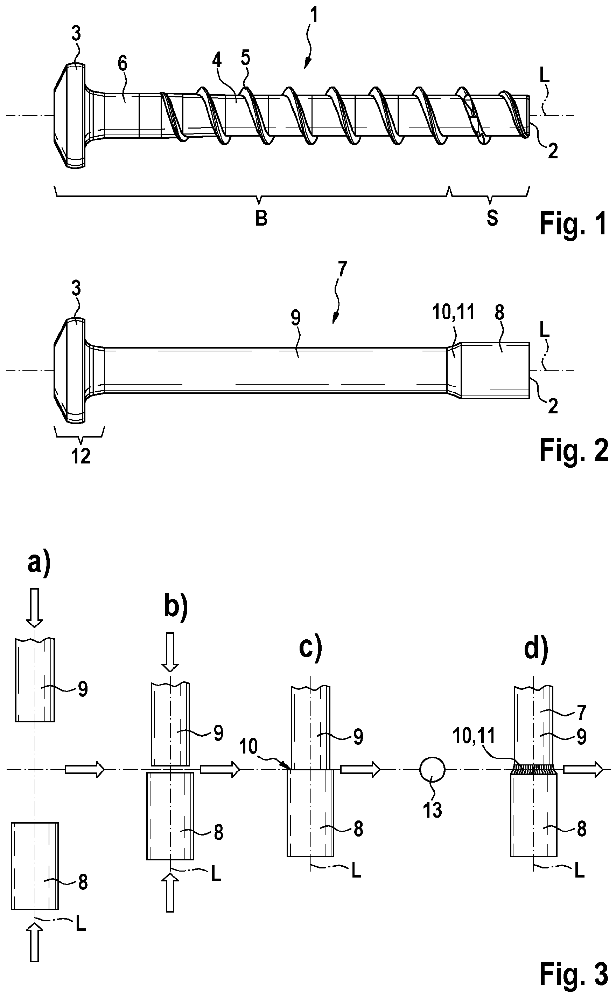

In Figur 1 ist eine Bimetallschraube 1 in Form einer Betonschraube dargestellt. Die Bimetallschraube 1 erstreckt sich entlang einer Längsachse L von einem einbringseitig vorderen Ende 2 der Bimetallschraube 1 bis zu einem Schraubenkopf 3, der hier als Halbrundkopf ausgebildet ist. An einem im Wesentlichen zylindrischen vorderen Schaftabschnitt 4 der Bimetallschraube 1 ist ein Gewinde 5 angeordnet, das sich vom vorderen Ende 2 bis zu einem hinteren gewindelosen Schaftabschnitt 6 erstreckt, der zwischen dem Gewinde 5 und dem Schraubenkopf 3 angeordnet ist. Um das Einschneiden eines Gewindes in die Wand eines Bohrlochs (nicht dargestellt), in das die als Betonschraube ausgebildete Bimetallschraube 1 planmäßig eingeschraubt werden soll, zu ermöglichen, ist ein vorderer Schneidabschnitt S des Außengewindes 5 induktiv gehärtet worden, so dass es eine Härte von mehr als 55 HRC aufweist. Damit ein Härten möglich ist, besteht der Schneidabschnitt S aus einem ersten, härtbaren Stahl, hier einem Kohlenstoffstahl mit der Werkstoffnummer 1.4037 gemäß DIN EN 10088-3:2014-12. Der übrige Teil der Bimetallschraube 1 besteht dagegen aus einem gegenüber dem Einfluss von feuchtem Außenbereich eines Gebäudes korrosionsbeständigen zweiten Stahl, hier einem Edelstahl mit der Werkstoffnummer 1.4401 gemäß DIN EN 10088-3:2014-12, dessen Kohlenstoffkonzentration geringer als die Kohlenstoffkonzentration des ersten Stahls ist, und der zum Einschneiden in die Bohrlochwand nicht ausreichend härtbar ist. Die Bimetallschraube 1 besteht somit aus zwei unterschiedlichen Stählen, die für den jeweiligen Einsatzzweck entsprechend ausgewählt wurden: Der härtbare Schneidabschnitt S zum Einschneiden eines Gewindes in die Bohrlochwand und der übrige Teil der Bimetallschraube 1 als korrosionsbeständiger Befestigungsabschnitt B zum Befestigen von Bauteilen an einem Bauwerk im Außenbereich.

Die Bimetallschraube 1 wird aus dem in Figur 2 dargestellten Grundkörper 7 hergestellt, indem auf den Grundkörper 7 das Außengewinde 5 aufgeschweißt wird. Das Gewindewalzen erfolgt nach dem Verschweißen eines ersten, vorderen Schaftteils 8 mit einem zweiten, hinteren Schaftteil 9 zum Grundkörper 7. Der erste, vordere Schaftteil 8 besteht aus dem ersten Stahl, ist als Zylinder ausgeformt und weist einen Durchmesser auf, der größer als der Durchmesser des zweiten Schaftteiles 9 ist. Der erste Schaftteil 8 und der zweite Schaftteil 9 sind an der Schweißstelle 10 durch eine Schweißnaht 11 verbunden. Der zweite Schaftteil 9 ist ebenfalls zylindrisch und besteht aus dem zweiten Stahl. An seinem hinteren Ende ist am zweiten Schaftteil 9 ein Kopfabschnitt 12 mit dem Schraubenkopf 3 angeformt. Der Kopfabschnitt 12 ist kein Teil des zweiten Schaftteils 9, besteht aber ebenfalls aus dem zweiten Stahl und wurde mit dem zweiten Schaftteil 9 aus einem Rohling durch Kaltmassivumformen hergestellt. Dadurch, dass der erste Schaftteil 8 einen größeren Durchmesser aufweist als der zweite Schaftteil 9, bildet die Schweißnaht 11 eine Art Kegelstumpf. Hierdurch ist es möglich, beim Gewindewalzen den ersten Stahl des ersten Schaftteils nach hinten, über die Schweißnaht 11 zu walzen, sodass der erste Stahl zwischen dem relativ harten Material der Schweißnaht 11 und einer nicht dargestellten Walzbacke liegt, wodurch die Walzbacke vor übermäßiger Abnützung geschützt ist.

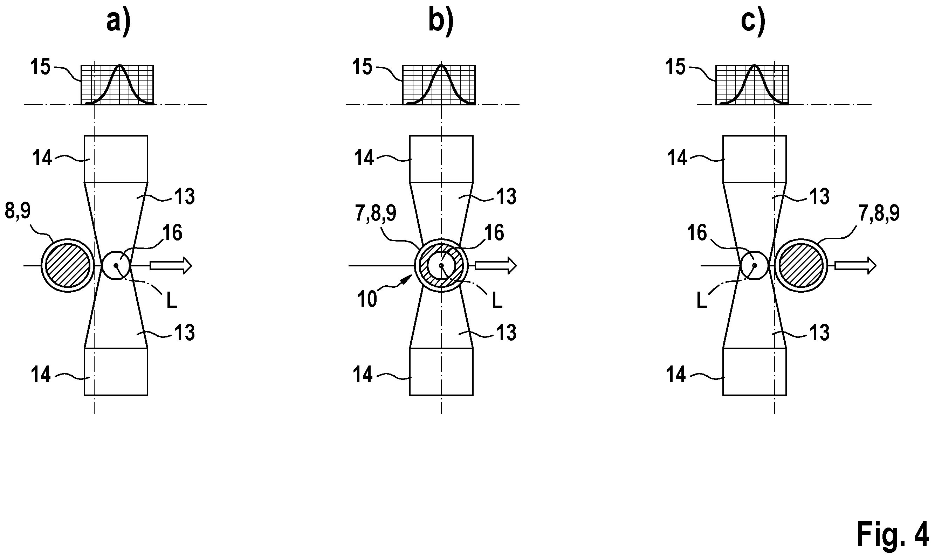

Das Verfahren zum Verschweißen der beiden Schaftteile 8, 9 zum Grundkörper 7 wird nachfolgend anhand der Figuren 3 und 4 näher beschrieben: In Figur 3 sind von links nach rechts paarweise je zwei Schaftteile 8, 9 dargestellt, die mittels eines Schweißstrahls 13, hier eines Laserstrahls, zu einem Grundkörper 7 an der Schweißstelle 10 verschweißt werden, wie dies in Position d) ganz rechts in Figur 3 zu sehen ist. Das Verschweißen erfolgt also mittels eines intensiven gebündelten Laserstrahls, also mittels Laserstrahlschweißen, einem Strahlschweißverfahren. Hierzu werden die beiden Schaftteile 8, 9 kontinuierlich, in Figur 3 von links, von Position a), nach rechts, bis zur Position d) relativ zu dem hier feststehenden Schweißstrahl 13 bewegt und gemeinsam translatorisch durch den Schweißstrahl 13 hindurchbewegt. Hierbei sind die beiden Schaftteile 8, 9 koaxial zur Längsachse L zueinander ausgerichtet. Die koaxial ausgerichteten Schaftteile 8, 9 werden in einer Zuführung (nicht dargestellt) zum Schweißstrahl 13 in Richtung der Längsachse L aufeinander zugeführt, sodass sich ihr Abstand verringert (Position b)), bis sie aneinander anliegen und sich zu Beginn des Verschweißens an Stirnseiten berühren, wie dies bei den Schaftteilen 8, 9 zu sehen ist, die sich in der Position c) befinden. Alternativ könnte das Verschweißen auch erfolgen, wenn die beiden Schaftteile 8, 9 zu Beginn des Verschweißens einen geringen Abstand von ungefähr einem Millimeter oder weniger zueinander aufweisen (nicht dargestellt), was zu Einfallstellen in der Umfangsfläche der Schweißnaht 11 führt, was wiederum ein Überwalzen der Schweißnaht 11 mit dem ersten Stahl des ersten Schaftteils 8 beim nachfolgenden Gewindewalzen begünstigt.

Bei der Bewegung der Schaftteile 8, 9 zum Schweißstrahl 13 und bei der gemeinsamen Translation der Schaftteile 8, 9 durch den Schweißstrahl 13, wobei sie miteinander an der Schweißstelle 10 verschweißt werden, rotieren die beiden Schaftteile 8, 9 nicht um die Längsachse L. Es erfolgt somit kein Rundschweißen um den Umfang der Schweißstelle 10, sondern es kommt zu einem "Durchschweißen", da durch die Energie des Schweißstrahls 13 die Querschnitte der Schaftteile 8, 9 im Bereich der Schweißstelle 10 vollständig von außen nach innen erhitzt werden, sodass es an der Schweißstelle 10 zu einer Schweißverbindung der beiden Stähle der Schaftteile 8, 9 kommt. Somit ist ein Stoppen der beiden Schaftteile 8, 9 im Schweißstrahl nicht notwendig und die Bewegung von Position a) zu Position d) der Figur 3 erfolgt kontinuierlich, so dass eine hohe Anzahl an Grundkörpern 7 in relativ kurzer Zeit hergestellt werden kann. Das erfindungsgemäße Verfahren zum Herstellen der Bimetallschraube 1 ist somit effizient und kostengünstig.

Damit das Verschweißen möglichst energieeffizient erfolgt, wird beim Bewegen der Schaftteile 8, 9 durch den Schweißstrahl 13 hindurch die Leistung der Laserquelle 14 und somit der Energieeintrag in die Schweißstelle 10 durch den Schweißstrahl 13 während der Bewegung der Schaftteile 8, 9 durch den Schweißstrahl 13 verändert, wie dies in Figur 4 dargestellt ist. In der Draufsicht der Figur 4 ist zu sehen, dass zum Verschweißen zwei sich gegenüberliegende Schweißquellen 14 genutzt werden, die derart ausgerichtet sind, dass sie einen gemeinsamen Fokuspunkt 16 bilden. Bei der Bewegung der Schaftteile 8, 9 durch den Fokuspunkt 16 wird die Leistung und somit die Intensität 15 der Schweißstrahlen13 zunächst von einem Minimum vor dem Eintritt der Schaftteile 8, 9 in den Fokuspunkt 16 (Position a)) bis zu einem Maximum vergrößert (Position b)) und dann wieder verringert (Position c)), so dass dann, wenn die Schweißstelle 10 mit der Längsachse L im Fokuspunkt 16 liegt, die Schweißquellen 14 maximale Leistung einbringen. Durch die Leistungsanpassung kann der Schweißvorgang optimiert und die Verweildauer der Schaftteile 8, 9 im Fokuspunkt 16 der Schweißstrahlen 13 verringert werden.

### Bezugszeichenliste

- 1: Bimetallschraube
- 2: vorderes Ende der Bimetallschraube 1
- 3: Schraubenkopf
- 4: vorderer Schaftabschnitt
- 5: Gewinde
- 6: hinterer, gewindeloser Schaftabschnitt
- 7: Grundkörper
- 8: erster, vorderer Schaftteil
- 9: zweiter, hinterer Schaftteil
- 10: Schweißstelle
- 11: Schweißnaht
- 12: Kopfabschnitt
- 13: Schweißstrahl
- 14: Schweißquelle
- 15: Intensität
- 16: Fokuspunkt
- B: Befestigungsabschnitt
- L: Längsachse
- S: Schneidabschnitt

## Patentansprüche

1. Verfahren zur Herstellung einer Bimetallschraube (1), insbesondere einer Betonschraube, die einen ersten Schaftteil (8) und einen zweiten Schaftteil (9) umfasst, die in Richtung einer Längsachse (L) der Bimetallschraube (1) hintereinander angeordnet und an einer Schweißstelle (10) mittels Strahlschweißen miteinander verschweißt werden,
**dadurch gekennzeichnet,**
**dass** die beiden Schaftteile (8, 9) beim Verschweißen kontinuierlich relativ zum Schweißstrahl (13) und durch ihn hindurchbewegt werden.

2. Verfahren nach Anspruch 1, **dadurch gekennzeichnet, dass** die beiden Schaftteile (8, 9) beim Verschweißen mittels des Schweißstrahls (13) nicht um die Längsachse (L) der Bimetallschraube (1) rotiert werden.

3. Verfahren nach einem der vorstehenden Ansprüche, **dadurch gekennzeichnet, dass** die beiden Schaftteile (8, 9) in einer Zuführung zum Schweißstrahl bewegt und in der Zuführung in Richtung der Längsachse (L) aufeinander zugeführt werden.

4. Verfahren nach einem der vorstehenden Ansprüche, **dadurch gekennzeichnet, dass** die beiden Schaftteile (8, 9) sich zu Beginn des Verschweißens an Stirnseiten berühren.

5. Verfahren nach einem der Ansprüche 1 bis 3, **dadurch gekennzeichnet, dass** die beiden Schaftteile (8, 9) zu Beginn des Verschweißens voneinander beabstandet sind.

6. Verfahren nach einem der vorstehenden Ansprüche, **dadurch gekennzeichnet, dass** beim Bewegen der Schaftteile (8, 9) durch den Schweißstrahl (13) die Leistung des Schweißstrahls (13) zunächst erhöht und dann wieder verringert wird.

7. Verfahren nach einem der vorstehenden Ansprüche, **dadurch gekennzeichnet, dass** der erste Schaftteil (8) aus einem ersten Stahl hergestellt wird und der zweite Schaftteil (9) aus einem zweiten Stahl, dessen Kohlenstoffkonzentration geringer ist, als die Kohlenstoffkonzentration des ersten Stahls.

8. Verfahren nach einem der vorstehenden Ansprüche, **dadurch gekennzeichnet, dass** der Durchmesser des ersten Schaftteils (8) größer als der Durchmesser des zweiten Schaftteils (9) ist.

9. Verfahren nach einem der vorstehenden Ansprüche, **dadurch gekennzeichnet, dass** nach dem Verschweißen der beiden Schaftteile (8, 9) ein Gewinde (5) auf den beim Verschweißen gebildeten Grundkörper (7) der Bimetallschraube (1) gewalzt wird.

## Claims

1. A method for manufacturing a bimetallic screw (1), in particular a concrete screw, which comprises a first shank portion (8) and a second shank portion (9), which are arranged one behind the other in the direction of a longitudinal axis (L) of the bimetallic screw (1) and are welded to one another at a weld point (10) by means of beam welding,
**characterized in that,**
the two shank portions (8, 9) are continuously moved relative to and through the welding beam (13) during the welding operation.

2. The method according to claim 1, **characterized in that** the two shank portions (8, 9) are not rotated about the longitudinal axis (L) of the bimetallic screw (1) during the welding operation by means of the welding beam (13).

3. The method according to any of the preceding claims, **characterized in that** the two shank portions (8, 9) are moved in a feed operation to the welding beam and are fed to one another in the feed operation in the direction of the longitudinal axis (L).

4. The method according to any of the preceding claims, **characterized in that** the two shank portions (8, 9) make contact at end faces at the beginning of the welding operation.

5. The method according to any of claims 1 to 3, **characterized in that** the two shank portions (8, 9) are spaced apart from one another at the beginning of the welding operation.

6. The method according to any of the preceding claims, **characterized in that** when the shank portions (8, 9) are moved by the welding beam (13), the power of the welding beam (13) is initially increased and then reduced again.

7. The method according to any of the preceding claims, **characterized in that** the first shank portion (8) is manufactured from a first steel and the second shank portion (9) is made from a second steel, the carbon concentration of which is lower than the carbon concentration of the first steel.

8. The method according to any of the preceding claims, **characterized in that** the diameter of the first shank portion (8) is greater than the diameter of the second shank portion (9).

9. The method according to any of the preceding claims, **characterized in that,** after the two shank portions (8, 9) have been welded, a thread (5) is rolled onto the base body (7) of the bimetallic screw (1) that is formed during welding.

## Revendications

1. Procédé de fabrication d'une vis bimétallique (1), en particulier d'une vis à béton, qui comprend une première partie de tige (8) et une deuxième partie de tige (9) qui sont disposées l'une derrière l'autre dans la direction d'un axe longitudinal (L) de la vis bimétallique (1) et qui sont soudées l'une à l'autre au niveau d'un point de soudure (10) au moyen d'un soudage par faisceau,
**caractérisé end ce que**
les deux parties de tige (8, 9) sont déplacées en continu par rapport au jet de soudure (13) et à travers celui-ci pendant le soudage.

2. Procédé selon la revendication 1, **caractérisé en ce que** les deux parties de tige (8, 9) ne sont pas tournées autour de l'axe longitudinal (L) de la vis bimétallique (1) lors du soudage au moyen du jet de soudure (13).

3. Procédé selon l'une des revendications précédentes, **caractérisé en ce que** les deux parties de tige (8, 9) sont déplacées dans un dispositif d'alimentation vers le faisceau de soudage et sont amenées l'une vers l'autre dans le dispositif d'alimentation dans la direction de l'axe longitudinal (L).

4. Procédé selon l'une des revendications précédentes, **caractérisé en ce que** les deux parties de tige (8, 9) se touchent au niveau des faces frontales au début du soudage.

5. Procédé selon l'une des revendications 1 à 3, **caractérisé en ce que** les deux parties de tige (8, 9) sont espacées l'une de l'autre au début du soudage.

6. Procédé selon l'une des revendications précédentes, **caractérisé en ce que**, lors du déplacement des pièces de tige (8, 9) par le jet de soudure (13), la puissance du jet de soudure (13) est d'abord augmentée, puis à nouveau réduite.

7. Procédé selon l'une des revendications précédentes, **caractérisé en ce que** la première partie de tige (8) est fabriquée à partir d'un premier acier et la deuxième partie de tige (9) à partir d'un deuxième acier dont la concentration en carbone est inférieure à la concentration en carbone du premier acier.

8. Procédé selon l'une des revendications précédentes, **caractérisée en ce que** le diamètre de la première partie de tige (8) est supérieur au diamètre de la deuxième partie de tige (9).

9. Procédé selon l'une des revendications précédentes, **caractérisé en ce que** après le soudage des deux parties de tige (8, 9), un filetage (5) est roulé sur le corps de base (7) de la vis bimétallique (1) formé lors du soudage.
